# EUROPÄISCHE PATENTSCHRIFT

(11) **EP 1 370 787 B1**
(45) Veröffentlichungstag und Bekanntmachung des Hinweises auf die Patenterteilung: **31.03.2010**
(21) Anmeldenummer: 02708195.9
(22) Anmeldetag: 02.02.2002
(51) Int. Cl.: F16K 1/44, F16K 31/06

(54) **KOAXIALMAGENTVENTIL**
COAXIAL SOLENOID VALVE
SOUPAPE ELECTROMAGNETIQUE COAXIALE

(30) Priorität: 23.03.2001 DE 10114175
(43) Veröffentlichungstag der Anmeldung: 17.12.2003
(73) Patentinhaber: Karl Dungs GmbH & Co., 73660 Urbach (DE)
(72) Erfinder: BERGER, Siegfried, 73278 Schlierbach (DE); FORSTER, Joachim, 71364 Winnenden (DE)
(74) Vertreter: Rüger, Barthelt & Abel Patentanwälte
(86) Internationale Anmeldenummer: PCT/DE2002/000377
(87) Internationale Veröffentlichungsnummer: WO 2002/077502

(56) Entgegenhaltungen:
- GB-A- 1 427 360
- GB-A- 1 471 085
- US-A- 1 882 392
- US-A- 5 503 174
- PATENT ABSTRACTS OF JAPAN vol. 1998, no. 12, 31. Oktober 1998 (1998-10-31) & JP 10 196835 A (GLYCO KYODO NYUGYO KK), 31. Juli 1998 (1998-07-31)

## Beschreibung

Die Erfindung betrifft ein Koaxialmagnetventil mit einem axial verschiebbaren inneren Ventilteller, mit einem den inneren Ventilteller umgebenden axial verschiebbaren äußeren Ventilteller, die beide koaxial zueinander angeordnet sind und jeweils gegen die Wirkung einer Schließfeder von ihrem jeweiligen Ventilsitz abheben, und mit einem Magnetantrieb zum Betätigen beider Ventilteller.

Ein derartiges Koaxialmagnetventil ist beispielsweise durch die DE 198 26 076 C1 bekanntgeworden.

Bei diesem bekannten Koaxialmagnetventil ist eine Spule vorgesehen, die auf einen mit dem inneren Ventilteller verbundenen Anker wirkt. Der äußere Ventilteller hintergreift den inneren Ventilteller in Schließrichtung und wird daher beim Öffnen des inneren Ventiltellers von diesem in Öffnungsrichtung mitgenommen. Die beiden Ventiltellern können somit nur gemeinsam geöffnet werden, wodurch eine Dichteprüfung des zwischen beiden Ventiltellern eingeschlossenen Mittelraums nur mit hohem technischen Aufwand durchgeführt werden kann.

Aus der GB-A-1427360 ist ein zur Gattung der Koaxialmagnetventile gehöriges Ventil bekannt, das einen Ventilsitz aufweist, dem ein innerer Ventilteller und ein oberhalb des inneren Ventiltellers angeordneter flacher äußerer Ventilteller zugeordnet ist. Beide Ventilteller sind koaxial zueinander angeordnet und jeweils gegen die Wirkung einer Feder von dem Ventilsitz weg bewegbar. Die beiden flachen Ventilteller sind übereinander angeordnet, wobei der untere Ventilteller an seiner Oberseite einen der Form des oberen Ventiltellers angepasste Kontur aufweist. Es ist ein Magnetantrieb zum Betätigen beider Ventilteller vorgesehen, wobei zu dem Magnetantrieb zwei axial übereinander angeordnete und jeweils eine Spule aufweisende, voneinander unabhängige Magnetkreise gehören. Jeder Magnetkreis enthält jeweils einen linear beweglich gelagerten Anker, wobei die beiden Anker axial übereinander angeordnet sind. Der obere Anker ist über eine Zugstange mit dem unteren Ventilteller verbunden. Der untere Anker ist mit dem oberen Ventilteller verbunden. Um dies zu bewerkstelligen, ist der Anker des unteren Ventiltellers von einer Schubstange durchgriffen, die den unteren Ventilteller mit dem oberen Anker verbindet.

Der obere Ventilteller dient dazu, das Ventil zu öffnen und zu schließen während der untere Ventilteller als verstellbare Drossel beispielsweise zur Beschränkung des Gasdurchlasses beim Zünden dient. Dazu ist beispielsweise eine hydraulische Verzögerungseinrichtung vorgesehen, die die Öffnungsbewegung des oberen Ankers und somit des unteren Ventiltellers verlangsamt.

Es ist daher die Aufgabe der Erfindung, bei einem Koaxialmagnetventil der eingangs genannten Art die beiden Ventilteller getrennt voneinander ansteuern zu können.

Diese Aufgabe wird erfindungsgemäß dadurch gelöst, daß der Magnetantrieb zwei axial übereinander angeordnete und jeweils eine Spule aufweisende voneinander unabhängige Magnetkreise umfaßt, die mit zwei axial übereinander angeordneten, jeweils mit dem inneren Ventilteller bzw. mit dem äußeren Ventilteller verbundenen Ankern zusammenwirken, wobei der Anker des äußeren Ventiltellers von einer den inneren Ventilteller mit seinem Anker verbindenden Schubstange durchgriffen ist, wobei der Ventilzwischenraum zwischen dem inneren und dem äußeren Ventilteller durch Dichtungen am Anker des äußeren Ventiltellers und an der Schubstange abgedichtet ist.

Der mit der Erfindung erzielte Vorteil besteht darin, daß die beiden auf einer gemeinsamen Achse angeordneten Ventilteller unabhängig voneinander betätigbar sind. Dies ermöglicht insbesondere eine einfache Dichtprüfung des zwischen beiden Ventiltellern eingeschlossenen Mittelraums, wie sie z.B. in der DE 200 15 703 U1 beschrieben ist.

Bei besonders bevorzugten Ausführungsformen der Erfindung sind der äußere Ventilteller und sein Anker unmittelbar miteinander verbunden.

Vorzugsweise ist zwischen den beiden Magnetkreisen ein nichtmagnetisches Trennstück vorgesehen, um jeweils Wechselwirkungen des einen Magnetkreises auf den anderen auszuschließen.

Die beiden Anker können in einer nichtmagnetischen Magnetschlußhülse, z.B. in einem Edelstahlrohr, oder auch in magnetischen Hülsen geführt sein. Das eine Ende der Magnetschlußhülse kann durch den Polkern für den Anker des inneren Ventiltellers verschlossen und der Polkern für den Anker des äußeren Ventiltellers innerhalb der Magnetschlußhülse befestigt, insbesondere darin eingepreßt sein, wobei die Schubstange dann auch den Polkern für den Anker des äußeren Ventiltellers durchgreift.

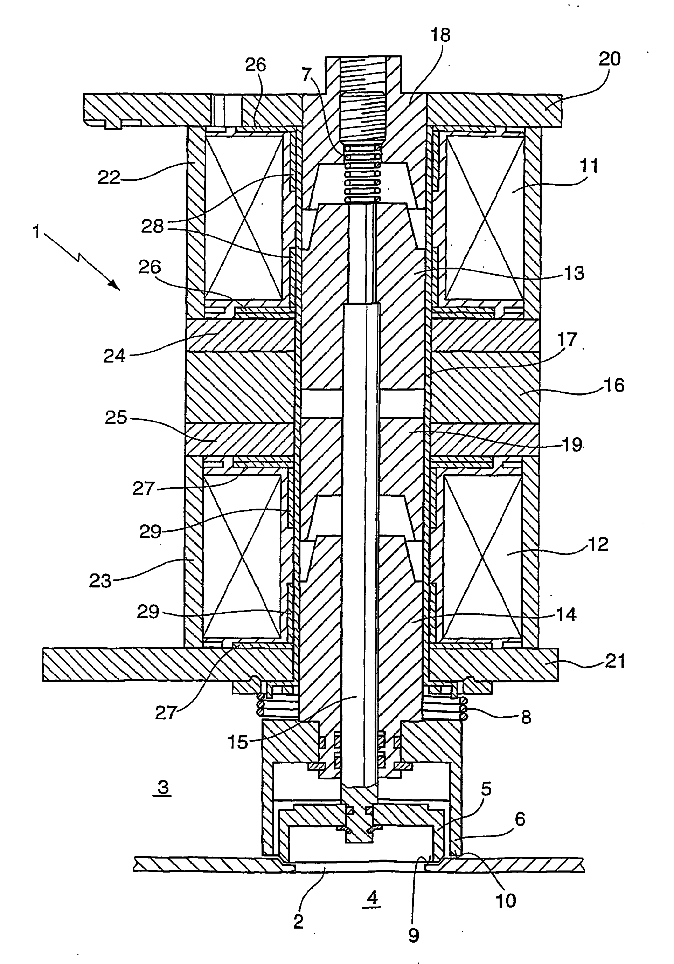

Weitere Vorteile der Erfindung ergeben sich aus der Beschreibung und der Zeichnung.

Die einzige Figur zeigt im Längsschnitt ein erfindungsgemäßes Koaxialmagnetventil **1,** dessen Ventilöffnung **2** einen Gaseintrittsraum **3** von einem Gasaustrittsraum **4** trennt.

Das Koaxialmagnetventil 1 umfaßt einen axial verschiebbaren inneren Ventilteller **5,** einen den inneren Ventilteller 5 umgebenden axial verschiebbaren äußeren Ventilteller **6,** die beide koaxial zueinander angeordnet sind und jeweils gegen die Wirkung einer Schließfeder **7, 8** von ihrem jeweiligen Ventilsitz **9, 10** abheben. Zum Betätigen der Ventilteller 5, **6** sind axial übereinander und koaxial zueinander zwei jeweils eine Spulen **11, 12** aufweisende, voneinander unabhängige Magnetkreise vorgesehen, die mit zwei axial übereinander angeordneten Ankern **13, 14** zusammenwirken. Der eine Anker 13 ist mit dem inneren Ventiltellers 5 durch eine Schubstange **15** und der andere Anker 14 unmittelbar mit dem äußeren Ventilteller 6 verbunden, wobei die Schubstange 15 den Anker 14 des äußeren Ventiltellers **6** konzentrisch.durchgreift. Zwischen den beiden Magnetkreisen befindet sich ein nichtmagnetisches Zwischenstück **16,** um jeweils Wechselwirkungen des einen Magnetkreises auf den anderen auszuschließen.

Die beiden Anker 10, 11 sind in einer Magnetschlußhülse **17** axial verschiebbar geführt, die im dargestellten Ausführungsbeispiel als Edelstahlrohr ausgebildet ist. An dem in der Figur oberen Ende ist die Magnetschlußhülse 17 durch den Polkern **18** für den Anker 13 dicht gegen die Umgebung abgeschlossen, während der Polkern **19** für den Anker 14 in die Magnetschlußhülse **17** eingepreßt und von der Schubstange 15 konzentrisch durchgriffen ist. An beiden Enden ist die Magnetschlußhülse **17** mit Hülsenplatten **20, 21** verbunden.

Ein durch die Spule 11 oder 12 erzeugtes Magnetfeld wird durch den Eisenkreis geleitet, der jeweils aus einem Rohrstück **22, 23** und einer Platte **24, 25** gebildet ist. Um das magnetische Feld besser bündeln zu können, sind zusätzlich Platten **26, 27** und Leithülsen **28, 29** eingebaut. Um den Eisenkreis zu schließen, bewegt sich der Anker 13 oder 14 jeweils auf seinen Polkern 18 bzw. 19 zu.

Wird die Spule 11 bestromt, so bewirkt ihr Magnetfeld eine magnetische Kraft auf den Anker 13 gegen die Schließfeder 7, und der innere Ventilteller 5 öffnet sich. Wird die Spule 12 bestromt, so bewirkt das Magnetfeld eine magnetische Kraft auf den Anker 14 gegen die Schließfeder 8, und der äußere Ventilteller 6 öffnet sich. Die beiden Ventilteller 2, 3 lassen sich so unabhängig voneinander öffnen.

## Patentansprüche

1. Koaxialmagnetventil (1) mit einem axial verschiebbaren inneren Ventilteller (5), mit einem den inneren Ventilteller (5) umgebenden axial verschiebbaren äußeren Ventilteller (6), die beide koaxial zueinander angeordnet sind und jeweils gegen die Wirkung einer Schließfeder (7, 8) von ihrem jeweiligen Ventilsitz (9, 10) abheben und die im geschlossenem Zustand miteinander einem des Dichtprüfung diendendem Mittelraum einschliessen,
und mit einem Magnetantrieb zum Betätigen beider Ventilteller (5, 6),
wobei
der Magnetantrieb zwei axial übereinander angeordnete und jeweils eine Spule (11, 12) aufweisende voneinander unabhängige Magnetkreise umfaßt, die mit zwei axial übereinander angeordneten, jeweils mit dem inneren Ventilteller (5) bzw. mit dem äußeren Ventilteller (6) verbundenen Ankern (13, 14) zusammenwirken, wobei der Anker (14) des äußeren Ventiltellers (6) von einer den inneren Ventilteller (5) mit seinem Anker (13) verbindenden Schubstange (15) durchgriffen ist
und wobei die Ventilteller (5,6) unabhängig voneinander betätigbar sind, wobei
der Ventilzwischenraum zwischen dem inneren und dem äußeren Ventilteller (5, 6) durch Dichtungen am Anker (14) des äußeren Ventiltellers (6) und an der Schubstange (15) abgedichtet ist.

2. Koaxialmagnetventil nach Anspruch 1, **dadurch gekenn zeichnet, daß** der äußere Ventilteller (6) und sein Anker (14) unmittelbar miteinander verbunden sind.

3. Koaxialmagnetventil nach Anspruch 1 oder 2, **dadurch gekennzeichnet, daß** zwischen den beiden Magnetkreisen ein nichtmagnetisches Zwischenstück (16) vorgesehen ist.

4. Koaxialmagnetventil nach einem der vorhergehenden Ansprüche, **dadurch gekennzeichnet, daß** die beiden Anker (13, 14) in einer nichtmagnetischen Magnetschlußhülse (17) oder in magnetischen Hülsen geführt sind.

5. Koaxialmagnetventil nach Anspruch 4, **dadurch gekennzeichnet, daß** die.Magnetschlußhülse (17) oder Teile davon als Edelstahlrohr ausgebildet ist.

6. Koaxialmagnetventil nach Anspruch 4 oder 5, **dadurch gekennzeichnet, daß** das eine Ende der Magnetschlußhülse (17) durch den Polkern (18) für den Anker (13) des inneren Ventiltellers (5) verschlossen ist.

7. Koaxialmagnetventil nach einem der Ansprüche 4 bis 6, **dadurch gekennzeichnet, daß** der Polkern (19) für den Anker (14) des äußeren Ventiltellers (6) in der Magnetschlußhülse (17) befestigt, insbesondere darin eingepreßt, und von der Schubstange (15) durchgriffen ist.

8. Koaxialmagnetventil nach einem der vorhergehenden Ansprüche, **dadurch gekennzeichnet, daß** die Schubstange (15) den Anker (14) des äußeren Ventiltellers (6) und/oder dessen Polkern (19) konzentrisch durchgreift.

## Claims

1. Coaxial solenoid valve (1) with an axially displaceable inner valve disc (5), with an axially displaceable outer valve disc (6) surrounding the inner valve disc (5), which are both arranged coaxially to one another and each lift from their respective valve seat (9, 10) against the action of a closing spring (7, 8) and which in closed state together enclose a central space serving for seal testing,
and with a magnetic drive for operation of the two valve discs (5, 6),
wherein the magnetic drive comprises two independent magnetic circuits, which are arranged axially one above the other and respectively have a coil (11, 12) and which cooperate with two armatures (13, 14), which are arranged axially one above the other and are respectively connected to the inner valve disc (5) or to the outer valve disc (6), wherein a connecting rod (15) connecting the inner valve disc (5) to its armature (13) passes through the armature (14) of the outer valve disc (6), and wherein the valve discs (5, 6) can be operated independently of one another,
wherein the valve space between the inner and the outer valve disc (5, 6) is sealed by seals on the armature (14) of the outer valve disc (6) and on the connecting rod (15).

2. Coaxial solenoid valve according to claim 1, **characterised in that** the outer valve disc (6) and its armature (14) are directly connected to one another.

3. Coaxial solenoid valve according to claim 1 or 2, **characterised in that** a non-magnetic intermediate piece (16) is provided between the two magnetic circuits.

4. Coaxial solenoid valve according to one of the preceding claims, **characterised in that** the two armatures (13, 14) are disposed in a non-magnetic end sleeve (17) or in magnetic sleeves.

5. Coaxial solenoid valve according to claim 4, **characterised in that** the magnet end sleeve (17) or parts thereof is configured as a special steel tube.

6. Coaxial solenoid valve according to claim 4 or 5, **characterised in that** one end of the magnet end sleeve (17) is closed by the pole shank (18) for the armature (13) of the inner valve disc (5).

7. Coaxial solenoid valve according to one of claims 4 to 6, **characterised in that** the pole shank (19) for the armature (14) of the outer valve disc (6) is fastened in the magnet end sleeve (17), in particular is pressed therein, and has the connecting rod (15) passing through it.

8. Coaxial solenoid valve according to one of the preceding claims, **characterised in that** the connecting rod (15) passes concentrically through the armature (14) of the outer valve disc (6) and/or the pole shank (19) thereof.

## Revendications

1. Soupape électromagnétique coaxiale (1), comportant une tête de soupape intérieure (5), coulissant axialement, et comportant une tête de soupape extérieure (6) coulissant axialement et entourant la tête de soupape intérieure (5), têtes qui sont disposées coaxialement l'une avec l'autre et se séparent de leur siège de soupape (9, 10) respectif, à l'encontre de l'action d'un ressort de fermeture (7, 8), et qui, à l'état fermé, enferment entre elles un espace intermédiaire servant à effectuer l'essai d'étanchéité,
et comportant un moyen d'entraînement magnétique pour actionner les deux têtes de soupape (5, 6),
sachant que le moyen d'entraînement magnétique comporte deux circuits magnétiques indépendants l'un de l'autre, qui sont placés axialement l'un au-dessus de l'autre et présentent chacun une bobine (11, 12), et qui coopèrent avec deux armatures (13, 14) disposées axialement l'une au-dessus de l'autre et reliées respectivement à la tête de soupape intérieure (5) et à la tête de soupape extérieure (6), l'armature (14) de la tête de soupape extérieure (6) étant traversée par une tige de poussoir (15) reliant la tête de soupape intérieure (5) à son armature (13),
et sachant que les têtes de soupape (5, 6) peuvent être actionnées indépendamment l'une de l'autre,
sachant que l'espace intermédiaire de soupape entre les têtes de soupape intérieure et extérieure (5, 6) est rendu étanche par des joints prévus sur l'armature (14) de la tête de soupape extérieure (6) et sur la tige de poussoir(15).

2. Soupape électromagnétique coaxiale selon la revendication 1, **caractérisée par le fait que** la tête de soupape extérieure (6) et son armature (14) sont reliées directement l'une à l'autre.

3. Soupape électromagnétique coaxiale selon la revendication 1 ou 2, **caractérisée par le fait qu'**une pièce intercalaire (16) non magnétique est prévue entre les deux circuits magnétiques.

4. Soupape électromagnétique coaxiale selon une des revendications précédentes, **caractérisée par le fait que** les deux armatures (13, 14) sont guidées dans une douille de court-circuit magnétique (17) non magnétique ou dans des douilles magnétiques.

5. Soupape électromagnétique coaxiale selon la revendication 4, **caractérisée par le fait que** la douille de court-circuit magnétique (17) ou des parties de celle-ci sont réalisées sous forme de tube en acier inoxydable.

6. Soupape électromagnétique coaxiale selon la revendication 4 ou 5, **caractérisée par le fait que** l'une des extrémités de la douille de court-circuit magnétique (17) est fermée par le noyau polaire (18) pour l'armature (13) de la tête de soupape intérieure (5).

7. Soupape électromagnétique coaxiale selon une des revendications 4 à 6, **caractérisée par le fait que** le noyau polaire (19) pour l'armature (14) de la tête de soupape extérieure (6) est fixé, notamment enfoncé, dans la douille de court-circuit magnétique (17) et est traversée par la tige de poussoir (15).

8. Soupape électromagnétique coaxiale selon une des revendications précédentes, **caractérisée par le fait que** la tige de poussoir (15) traverse de façon concentrique l'armature (14) de la tête de soupape extérieure (6) et/ou le noyau polaire (19) de celle-ci.
